Europäisches Patentamt

European Patent Office

Office européen des brevets

(11) Publication number: **0 412 780 A2**

# EUROPEAN PATENT APPLICATION

(21) Application number: 90308684.1

(51) Int. Cl.5: **G01L 3/24**

(22) Date of filing: 07.08.90

(30) Priority: 11.08.89 GB 8918367

(43) Date of publication of application:
13.02.91 Bulletin 91/07

(84) Designated Contracting States:
AT BE CH DE DK ES FR GB GR IT LI LU NL SE

(71) Applicant: Kirby, John
Ramslan Cottage, 75 Ford, Holbeton
Plymouth, South Devon(GB)

(72) Inventor: Kirby, John
Ramslan Cottage, 75 Ford, Holbeton
Plymouth, South Devon(GB)

(74) Representative: McNeight, David Leslie et al
McNeight & Lawrence Regent House Heaton
Lane
Stockport Cheshire SK4 1BS(GB)

(54) Method and apparatus for measuring vehicle power.

(57) Vehicle engine power is evaluated from measurements of the force produced by the engine, as by measuring deformation or displacement of a drive train member such as twisting of a propellor shaft, and the velocity of the vehicle. Power is calculated from the relationship

Power = force x velocity

EP 0 412 780 A2

## METHOD AND APPARATUS FOR MEASURING VEHICLE POWER

This invention relates to measuring vehicle engine power.

The power output of an engine can be bench-measured to give a brake horse-power figure which can be related to engine speed. This however may bear little relationship to the power of the engine in actual driving conditions and is in any event not useful for monitoring engine performance under actual driving conditions when performance-related parameters may change, such for example as ambient temperature, fuel mixture, spark-plug timing (in petrol engines) and so on.

The present invention provides a method and apparatus for measuring engine power not subject to these disadvantages.

The invention comprises a method for measuring the power output of a vehicle engine comprising measuring the force produced by the engine and the velocity of the vehicle and evaluating the power from said measurement.

The force may be measured by measuring deformation or displacement of a drive train member such for example as twisting of a propellor shaft. Such may be measured by measuring a time delay between peripheral marks at axially-spaced positions on said shaft passing fixed sensors. The marks may comprise magnetic marks, the sensors then being adapted to detect same.

The velocity may be measured by a regular vehicle speedometer, or by measuring the rotational velocity of said drive train member, as by measuring the frequency with which one of said peripheral marks passes one of said fixed sensors - since one is in any event sensing passage of such mark in order to measure force one might as well utilise the signal therefrom in a speed-measuring arrangement.

The invention also comprises apparatus for measuring the power output of a vehicle engine comprising engine force measuring means and vehicle velocity measuring means and evaluating means evaluating the said power output from the measured force and velocity.

The relationship between power, force and velocity is

Power = force x velocity

and so Power = KAV

where A is propellor shaft twist, V is velocity and K is a constant.

Clearly, the relationship holds good only when the drive is connected and the vehicle is running, and it must be noted that power losses which are not converted to useful driving force are not accounted for. Thus power absorbed in battery charging or the running of cooling or heating fans or air-conditioning equipment and power lost upstream of the drive train through friction-generated heat and noise will also not figure in the calculation.

Subject to these reservations, however, the method and apparatus will be capable of giving a useful and continuous indication of engine power output under driving conditions and this will be useful in monitoring engine performance especially in high performance e.g. racing and rallying vehicles, in trucks, in trains and tanks as well as in boats and airplanes.

Embodiments of apparatus and methods for measuring the power output of a vehicle engine according to the invention will now be described with reference to the accompanying drawings in which:-

Figure 1 is a view of a propellor shaft of a road vehicle when not transmitting torque, showing magnetic sensing means;

Figure 2 is a like view of the shaft of Figure 1 when transmitting torque;

Figure 3 is a diagrammatic illustration of apparatus giving a continuous read-out of power; and

Figure 4 is a diagrammatic illustration of another such apparatus.

The drawings illustrate methods and apparatus for measuring the power output of a vehicle engine comprising measuring the force produced by the engine and the velocity of the vehicle and evaluating the power from such measurement essentially by multiplying the measured force by the measured velocity.

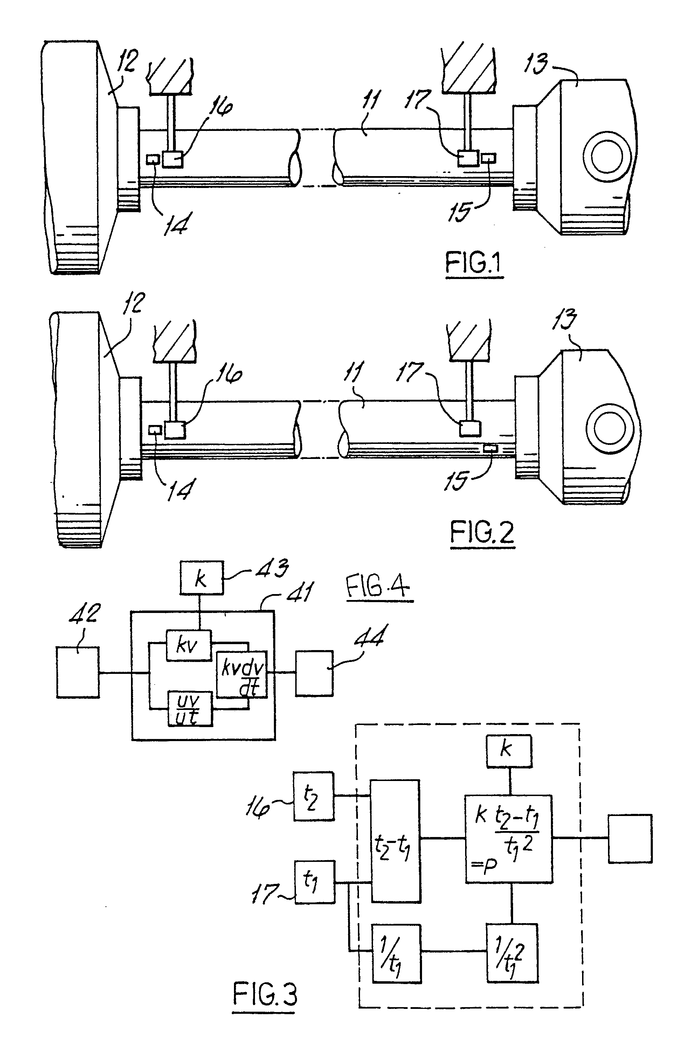

Figures 1 and 2 illustrate measuring the driving force by measuring deformation of a drive train member namely the propellor shaft 11 of a road vehicle. When the shaft 11 transmits driving power from the gearbox 12 to the axle 13 it twists under the transmitted torque. The extent of twisting is reasonably linear with respect to the torque.

Magnetic markers 14,15 are mounted on the shaft 11 at opposite ends thereof. It is convenient to regard them as being aligned (though it is not essential that they are) when the shaft 11 is in its normal, i.e. untwisted condition. Fixed, aligned sensors 16,17 are mounted adjacent the locations of the magnetic markers 14,15 to sense when they pass as the shaft 11 rotates. The aligned markers and sensors will give rise to simultaneous output signals from the sensors 16,17 so long as the shaft 11 is not loaded. Once power is transmitted however, the shaft 11 will twist proportionally to the torque and hence the force which drives the vehicle.

The twisting will delay the signal from sensor 17 as compared to that from sensor 16 by a time interval proportional to the twisting, and hence proportional to the force.

The delay will also be inversely proportional to the shaft rotational speed. A measure of that speed of course can be obtained from the frequency of pulses from one of the sensors 16,17, and this will serve also to generate a vehicle velocity value, velocity being proportional to that frequency.

However, the vehicle will usually have an accurate speedometer and a velocity signal can be taken from this.

In any event, a force signal from the time delay between the sensors and a velocity signal, however obtained, are multiplied together, as by deriving digital values and multiplying them in a microprocessor together with a constant to give an engine power signal. The constant can be determined by a calibration procedure and selected according to the units in which the power output is required to be displayed. There can of course be provided means for using different constants to display the power output in different units.

Figure 3 illustrates this diagrammatically, time signals from sensors 16,17 being fed to a microprocessor 3, which derives the delay $t_2-t_1$, and a velocity measure as $1/t_1$, namely the frequency of pulses from sensor 17. From this is derived $(1/t_1)^2$ and then) the function $K(t_2-t_1)/(t_1)$ where K is a constant output from a selector 32 according to the units in which the quantity is required to be displayed on cab readout 33.

Instead of the velocity being derived from sensor 17 it could of course be supplied from a regular vehicle speedometer.

Another method, not involving the propellor shaft twisting, of measuring power is from the two equations

Power = force x velocity
Force = mass x acceleration

Since acceleration is the time derivative of velocity, we can say

$$Power = KV\frac{dv}{dt}$$

Figure 4 illustrates an arrangement using this relationship in which the single output to a processor 41 is from a speedometer 42 which could of course be one of the sensors 16,17 referred to above. A constant K is supplied as before from a selector 43 and displayed on a cab readout 44.

It is not necessary to use a digital microprocessor - the speedometer signal can be a voltage and the differentation effected in a simple capacitor/resistor differentiating circuit.

This arrangement works only for a vehicle whose mass is known and sensibly constant. It would not be appropriate, for example, for load-carrying vehicles of which the all-up weight will depend on the load.

It will be appreciated that it is not intended to limit the invention to the above example only, many variations, such as might readily occur to one skilled in the art, being possible, without departing from the scope thereof as defined by the appended claims.

## Claims

1. A method for measuring the power output of a vehicle engine comprising measuring the force produced by the engine and the velocity of the vehicle and evaluating the power from said measurement.

2. A method according to claim 1, in which the force is measured by measuring deformation or displacement of a drive train member.

3. A method according to claim 2, in which the force is measured by measuring twisting of a propellor shaft.

4. A method according to claim 3, in which said twisting is measured by measuring a time delay between peripheral marks at axially-spaced positions on said shaft passing fixed sensors.

5. A method according to claim 4, the marks comprising magnetic marks and the sensors being adapted to detect same.

6. A method according to any one of claims 1 to 5, in which the velocity is measured by a regular vehicle speedometer.

7. A method according to any one of claims 1 to 5, in which the velocity is measured by measuring the rotational velocity of a drive train member the deformation or displacement of which is measured to measure the force.

8. A method according to claim 7, in which the velocity is measured by measuring the frequency with which a peripheral mark on the drive train member passses a fixed sensor.

9. Apparatus for measuring the power output of a vehicle engine comprising engine force measuring means and vehicle velocity measuring means and evaluating means for evaluating the said power output from the measured force and velocity.

10. Apparatus according to claim 9, in which the said force measuring means comprise vehicle drive train member deformation or displacement measuring means.

11. Apparatus according to claim 9, said force measuring means comprising axially-spaced marks on a propellor shaft which alter their relative circumferential positions and sensors determining a time delay between the markers passing circumferential positions occasions by twisting of the propellor shaft under the engine force.

12. Apparatus according to claim 11, said marks being magnetic marks.

13. Apparatus according to claim 11, said marks being optical marks.

14. Apparatus according to any one of claims 9 to 13, in which said vehicle velocity measuring means comrprise a regular vehicle speedometer.

15. Apparatus according to any one of claims 9 to 13, in which the vehicle velocity measuring means comprise means measuring the rotational velocity of a drive train member the deformation or displacement of which is measured to measure the force.

16. Apparatus according to claim 15, in which said vehicle velocity measuring means comprise frequency measuring means measuring the frequency of detection of one of said marks.

FIG.1

FIG.2

FIG.4

FIG.3